# EUROPEAN PATENT SPECIFICATION

(11) **EP 1 619 046 B1**
(45) Date of publication and mention of the grant of the patent: **28.03.2007**
(21) Application number: 05105760.2
(22) Date of filing: 12.09.2001
(51) Int. Cl.: B60B 31/02

(54) **Device for automatically straightening a wheel**
Vorrichtung zum automatischen Richten eines Rades
Dispositif pour redressement automatique d'une roue

(30) Priority: 13.09.2000 NL 1016171
(43) Date of publication of application: 25.01.2006
(62) Divisional of application: 01121957.3
(73) Proprietor: Holland Mechanics BV, 1440 AJ Purmerend (NL)
(72) Inventor: Begheyn, Richard Petrus, 1444 EA Purmerend (NL); Vermeulen, Eef Peter Frans, 6097 EA Heel (NL)
(74) Representative: Uittenbogaart, Gustaaf Adolf

(56) References cited:
- EP-A- 0 476 749
- EP-A- 0 561 459
- US-A- 5 103 414

## Description

The device relates to a method according to the preamble of Claim 1. Such a method is known, inter alia from US 5103414. This document discloses a calculation method whereby nipple rotations are calculated using weight factors to influence the to be obtained lateral run-out, radial run-out and spoke stress. The disclosed method does not use the calculation to straighten a wheel to within a specific tolerance for these values, also there is no disclosure for differentiating tolerances for different types of wheels.

The object of the invention is to make an improvement in this respect, and to that end the method is according the characterizing part of Claim 1. By using this method different types of wheel can be straightened in a random sequence whereby each wheel is straightened in accordance with its own properties to a set tolerance that is sufficient for that wheel type, thereby increasing the capacity of the straightening machine.

According to an embodiment the method is according to Claim 2. This way in a manual straightening machine there is no time lost in obtaining settings for the straightening program.

According to another embodiment the method is according to Claim 3. By automatically determining the wheel type the straightening of wheels with wheel types in random sequence can take place automatically.

Further the invention relates to a method for determining straightening parameters for use in the method according to the invention. To that end the method is according to the characterizing part of Claim 4. By tightening and/or loosening one spoke the properties of the wheel can be determined accurate and fast.

According to an embodiment the method is according to Claim 5. In this way the accuracy of the straightening parameters is improved.

According to an embodiment the method is according to Claim 6. By using a spoke that is at a distance from the valve hole the influence of that hole is minimized.

According to an embodiment the method is according to Claim 7. In this way the straightening parameters are easy accessible.

The invention is explained below with reference to a number of exemplary embodiments with the aid of a drawing, in which:
Figure 1 shows a spoked wheel which is to be straightened,
Figure 2 shows a diagrammatic layout of a bicycle factory with wheel assembly machines and a straightening machine, and
Figure 3 shows a diagram indicating the influence that tensioning a spoke has on the lateral run-out.

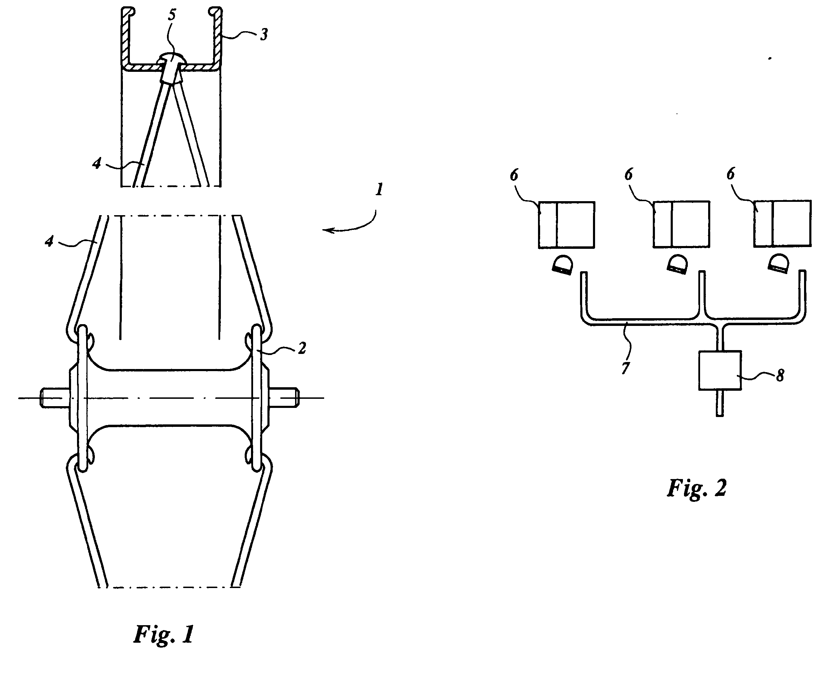

Figure 1 shows a spoked wheel 1, such as a bicycle wheel. Said wheel 1 is composed of a hub 2 and a rim 3, the rim 3 being mounted with a number of spokes 4 on the hub 2. The spokes 4 are fixed in the rim 3 with a nipple 5, which is screwed onto the spoke 4.

The spokes 4 are distributed at regular intervals around the circumference of the rim 3. The position of the rim 3 relative to the hub 2 is determined by the initial shape of the hub 2 and the rim 3, and by the balance between the tensions in the individual spokes and the internal tensions in the rim 3 after the assembly of the wheel 1.

During the rotation of the rim about the axis of rotation of the wheel 1, the rim 3 can wobble parallel to the axis of rotation with a lateral run-out h, and the rim 3 can also wobble in such a way that the distance from the axis of rotation changes with a radial run-out v. Said lateral run-out h and the radial run-out v are undesirable, because during, for example, cycling the rider feels this wobble. In order to reduce this wobble, the wheels are straightened in a straightening machine, such as is described, inter alia, in Application EP-A-0476749. During said straightening, the lateral run-out h and the radial run-out v are reduced by tightening or loosening the nipple 5 until they lie within a set tolerance.

The layout of a bicycle factory is shown in Figure 2, the wheels 1 being assembled from hub, spokes and rim on the wheel assembly machine 6 and subsequently conveyed by way of a conveyor system 7 to an automatic straightening machine 8.

Many types of bicycles are made in a bicycle factory, and therefore many types of wheels 1 are also made, these wheels being manufactured in ever-decreasing runs. The wheels 1 differ, for example, in diameter of the rim 3, in shape and size of the profile of the rim 3, in number of spokes 4, in length, weight and/or colour of the spokes 4, and in type of hub 2. The different types of wheels 1 can also have different tolerances, so that the straightening machine 8 is provided with means for recognizing a certain type of wheel 1. The straightening machine 8 is provided with sensors for this purpose.

The diameter of the wheel 1 or its rim 3 is measured here, for example, by a diameter measurement when the wheel 1 is turning in the straightening machine 8. At the same time, the weight of the wheel 1 can also be measured with a weight sensor in the roller track. The breadth of the rim 3 and the breadth of the hub 2 are measured by clamping the rim 3 and the hub 2 respectively between two linear, movable slides and measuring the positions of the slides with encoders after the clamping. The dimensions can also be obtained by an electromagnetic or optical scan of the wheel 1. If desired, the height of the profile of the rim 3 can also be measured in a comparable way. In addition, the number of spokes and the distance between the individual spokes can be determined by rotating the wheel 1. There is then a sensor for detecting the passage of the spokes, a full revolution being analysed from the already determined diameter and a known circumferential speed.

The data determined by the sensors is compared with the data on the different wheels 1 stored in a database. The measurements of the characteristics of the wheel 1 are carried out in the straightening machine 8 in a very short time in production conditions, so that it must be assumed that there can often be deviations. Therefore, in order still to be able to determine the type of wheel in a reliable way, there is an identification program that compares the measured data with the data stored in the database. The measured data in this case are first provided with a tolerance, and it is subsequently examined what types stored in the database fall within the measured data plus the tolerance for all characteristics. The number of types meeting this requirement is limited. The tolerances are subsequently reduced, possibly differing for the different measurements, and it is examined what type now corresponds most closely to the measured data.

In the exemplary embodiment shown, the sensors used for recognizing the type of wheel form part of the straightening machine 8. It will be clear to the person skilled in the art that these sensors can also form part of the conveyor system 7. This will be the case in particular if several straightening machines 8 are connected to the conveyor system 7.

After the type of wheel 1 present in the straightening machine 8 has been established, the relevant data for this type of wheel 1 is scanned in, and the straightening process can begin. Owing to the fact that the tolerances can also differ for the different types of wheels, the straightening of the wheels for which greater tolerances have been set will be completed more quickly, so that the average capacity of the straightening machine 8 is increased. Among the data becoming available from the database in the straightening machine are, inter alia, the straightening parameters of the wheel 1. Said straightening parameters are the data by which the straightening program of the straightening machine 8 works.

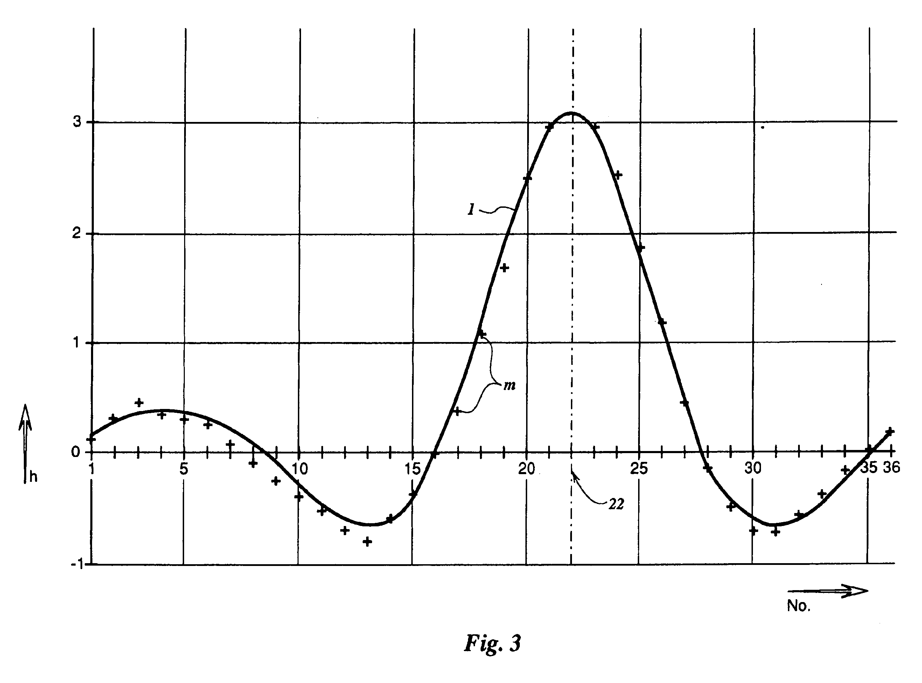

The straightening parameters are determined for each type of wheel 1. During this determination process, a wheel 1 whose lateral run-out h and radial run-out v are minimal are deliberately deformed by tightening and loosening one spoke 4. That spoke can be, for example, a spoke 4 which is situated at an angle of approximately 90° to the radial to the valve hole in the rim 3. This means that the influence of the valve hole is minimal. If in a wheel with 36 spokes the spoke next to the valve hole is spoke 1, then spoke 22, for example, is tightened or loosened. Figure 3 shows the lateral run-out h occurring in the case of different spokes if spoke 22 is screwed five full revolutions tighter. This is indicated for each spoke by point m. Using arithmetical methods, the deformation is approximated by a mathematical formula, indicated by the line 1. Said mathematical formula describes the behaviour of the wheel 1, and in particular the lateral run-out when nipple 5 is tightened. Comparable formulae exist for the lateral run-out when nipple 5 is loosened and for the radial run-out v on tightening and loosening of the nipple 5.

Since the lateral run-out h and the radial run-out v of all spokes have to be measured after tightening and/or loosening of the nipple 5 of spoke 22, this is time-consuming and if it had to be carried out during the straightening, the capacity of the straightening machine 8 would be adversely affected. For that reason, this determination of the characteristics of the wheel 1 is carried out beforehand and the results are recorded as straightening parameters in a database that can be accessed when the type of wheel 1 is known.

During the straightening of a wheel 1 in the straightening machine 8, the type of wheel 1 is determined first of all in the manner described above. The straightening parameters are then retrieved from the database, and the lateral run-out h and the radial run-out v of the wheel 1 are measured. The tension of the spokes 4 may also be measured, for example by measuring the vibration frequency of the spokes 4 after being knocked. By means of the straightening parameters and the measured values, the straightening program calculates the corrections to be made on the wheel 1. These corrections consist of tightening and/or loosening a number of nipples 5. The straightening machine 8 makes these corrections without interim measurements, and the entire wheel 1 is subsequently measured again, and it is checked whether it lies within the tolerances. If desired, the straightening program may calculate again, on the basis of the measured values, the corrections to be made until the wheel 1 lies within the tolerances.

It goes without saying that the straightening program can also be carried out by an apparatus by means of which the lateral run-out h and the radial run-out v can be measured, and in the case of which the straightening is carried out by an operator. The wheel 1 in that case is placed in the apparatus by the operator, and the operator feeds the type of wheel 1 into the control of the apparatus. The deviations are then measured, and the straightening parameters are retrieved from the database. After the straightening program has calculated the corrections to be made, these are shown on the screen and are subsequently made in the wheel by the operator. After all corrections have been made, a new measurement may possibly be carried out as a check.

In the exemplary embodiment shown, the settings of the straightening machine 8 are determined with the aid of the characteristics of the wheel 1 to be straightened, which characteristics are established by one or more sensors. In another embodiment according to the invention, each assembled wheel is given a code that is unique to the wheel, is unique to the bicycle to be made with the wheel, or is unique to the type of wheel. This code can be scanned electronically by means of a scanner, and during or subsequent to the assembly of the wheel is placed on the rim 3 or on a label to be fixed on a spoke 4. A known code is the barcode. The code is scanned into the straightening machine 8, and the straightening machine 8 is set using the information connected with the code.

## Claims

1. Method for straightening a spoked wheel (1) in a straightening machine (8) using a straightening program comprising the steps of measuring near each spoke a lateral run-out (h) and a radial run-out (v) of a rim (3) of the wheel and then calculating the desired rotation of a nipple (5) around a spoke (4) for each nipple in the wheel using straightening parameters, the calculated nipple rotation resulting in changing the tension in a number of spokes with the aim to reduce the lateral run-out and the radial run-out of the wheel **characterised in that** the straightening program retrieves the straightening parameters of the wheel (1) to be straightened comprising wheel properties and a set tolerance for the lateral run-out (h) and the radial run-out (v) from a database containing straightening parameters for different types of wheels.

2. Method according to claim 1 whereby the operator of the straightening machine (8) feeds the type of wheel in the straightening program which then retrieves the straightening parameters of the wheel to be straightened.

3. Method according to claim 1 whereby the straightening program includes a wheel identification module for automatically determining the type of wheel to be straightened.

4. Method for determining straightening parameters comprising wheel properties and a set tolerance for the lateral run-out (h) and the radial run-out (v) for use in a method according to one of the previous claims **characterized in that** the wheel properties for a type of wheel are calculated by measuring lateral run-out (h) and radial run-out (v) values caused by tightening and/or loosening one spoke (4) of a wheel of that type.

5. Method according to claim 4 whereby prior to tightening and/or loosening the one spoke the wheel is straightened to a minimal lateral run-out and a minimal radial run-out.

6. Method according to claim 4 or 5 whereby the one spoke is situated at angle of 90 degrees or more to the radial to a valve hole in the rim (3).

7. Method according to claim 4, 5 or 6 whereby the straightening parameters of different types of wheels are recorded in a database that is accessible for use in the straightening program.

## Patentansprüche

1. Verfahren zum Richten eines Speicherrads (1) in einer Richtmaschine (8), mithilfe eines Richtprogramms, einschließlich der Schritte, neben jeder Speiche einen seitlichen Auslauf (h) und einen radialen Auslauf (v) der Felge (3) des Rads zu messen und dann die gewünschte Drehbewegung eines Nippels (5) um eine Speiche (4) für jeden Nippel des Rads mithilfe von Richtparametern zu berechnen, wobei die errechnete Drehbewegung des Nippels bewirkt, dass sich die Spannung in einigen Speichern verändert, mit dem Ziel, den seitlichen Auslauf und den radialen Auslauf des Rads zu verringern, **dadurch gekennzeichnet, dass** das Richtprogramm die Richtparameter des Rads (1), das zu richten ist, einschließlich der Eigenschaften des Rads und des festgelegten Abmaßes für den seitlichen Auslauf (h) und den radialen Auslauf (v) aus der Datenbank abruft, die die Richtparameter für verschiedene Radarten enthält.

2. Verfahren nach Anspruch 1, wobei der Betreiber der Richtmaschine (8) die Radart in das Richtprogramm eingibt, das die Richtparameter des Rads, das zu richten ist, dann abruft.

3. Verfahren nach Anspruch 1, wobei das Richtprogramm ein Modul zur Erkennung des Rads enthält, das die Art des Rads, das gerichtet werden soll, automatisch festlegt.

4. Verfahren zur Festlegung von Richtparametern, einschließlich Eigenschaften des Rads und eines festgelegten Abmaßes für den seitlichen Auslauf (h) und den radialen Auslauf (v) zum Verwenden im Verfahren nach einem der vorhergehenden Ansprüche, **dadurch gekennzeichnet, dass** die Eigenschaften des Rads für eine Radart berechnet werden, indem die Werte des seitlichen Auslaufs (h) und des radialen Auslaufs (v), die sich durch Anziehen und/oder Lockern einer Speiche (4) dieser Radart ergeben, gemessen werden.

5. Verfahren nach Anspruch 4, wobei das Rad vor Anziehen und/oder Lockern der Speiche gemäß einem seitlichen Mindestabmaß und einem radialen Mindestabmaß gerichtet wird.

6. Methode nach Anspruch 4 oder 5, wobei die Speiche sich in einem Winkel von mindestens 90 Grad radial zum Ventilloch in der Felge (3) befindet.

7. Verfahren nach Anspruch 4, 5 oder 6, wobei die Richtparameter für verschiedene Radarten in einer Datenbank gespeichert sind, auf die im Richtprogramm zugegriffen werden kann.

## Revendications

1. Procédé pour redresser une roue à rayons (1) dans une machine à redresser (8) en utilisant un programme de redressement comprenant les étapes consistant à mesurer près de chaque rayon un excentrage latéral (h) et un excentrage radial (v) d'une jante (3) de la roue et puis à calculer la rotation souhaitée d'un embout (5) autour d'un rayon (4) pour chaque embout dans la roue en utilisant des paramètres de redressement, la rotation de l'embout calculée ayant pour résultat le changement de la tension dans plusieurs rayons dans le but de réduire l'excentrage latéral et l'excentrage radial de la roue **caractérisé en ce que** le programme de redressement retrouve les paramètres de redressement de la roue (1) devant être redressée comprenant des propriétés de roue et une tolérance fixée pour l'excentrage latéral (h) et l'excentrage radial (v) à partir d'une base de données contenant des paramètres de redressement pour différents types de roues.

2. Procédé selon la revendication 1 moyennant quoi l'opérateur de la machine à redresser (8) saisit le type de roue dans le programme de redressement qui retrouve alors les paramètres de redressement de la roue devant être redressée.

3. Procédé selon la revendication 1 moyennant quoi le programme de redressement comprend un module d'identification de roue pour déterminer automatiquement le type de roue devant être redressée.

4. Procédé pour déterminer des paramètres de redressement comprenant des propriétés de roue et une tolérance fixée pour l'excentrage latéral (h) et l'excentrage radial (v) pour l'usage dans un procédé selon l'une des revendications précédentes **caractérisé en ce que** les propriétés de roue pour un type de roue sont calculées en mesurant les valeurs d'excentrage latéral (h) et d'excentrage radial (v) causées par le serrage et/ou le desserrage d'un rayon (4) d'une roue de ce type.

5. Procédé selon la revendication 4 moyennant quoi avant le resserrage et/ou le desserrage dudit un rayon la roue est redressée jusqu'à un excentrage latéral minimal et un excentrage radial minimal.

6. Procédé selon la revendication 4 ou 5 moyennant quoi ledit un rayon est situé à un angle de 90 degrés ou plus par rapport à une radiale à un trou de soupape dans la jante (3).

7. Procédé selon la revendication 4, 5 ou 6 moyennant quoi les paramètres de redressement de différents types de roues sont enregistrés dans une base de données qui est accessible pour l'usage dans le programme de redressement.
